# EUROPEAN PATENT APPLICATION

(11) **EP 1 263 257 A2**
(43) Date of publication of application: **04.12.2002**
(21) Application number: 01305935.7
(22) Date of filing: 10.07.2001
(51) Int. Cl.: H04Q 11/00

(54) **Optical network hub structure**

(30) Priority: 01.06.2001 US 872356
(71) Applicant: Redfern Broadband Networks Inc., Wilmington, County of Newcastle, Delaware, 19801 (US)
(72) Inventor: Lauder, Richard, Maroubra, New South Wales 2035 (AU); Halgren, Ross, Collaroy Plateau, New South Wales 2097 (AU); Bryce, Jennifer, Potts Point, New South Wales 2011 (AU); Morgan, Trefor, Carlton, Victoria 3053 (AU)
(74) Representative: DeVile, Jonathan Mark, Dr.

(57) **Abstract**

A hub structure for use in an optical network, the optical network comprising a ring structure carrying a bidirectional optical data signal and a plurality of hub structures arranged in-line within the ring structure, the optical data signal comprising primary and secondary path transmission signals having opposing transmission directions on the ring structure, the hub structure comprising a drop unit arranged, in a normal state, to drop and through-connect a primary receive path signal for further processing at the hub structure, and, in a protection state, to drop and through-connect a secondary receive path signal for further processing at the hub structure,

## Description

### Field of the invention

The present invention relates broadly to a hub structure for use in an optical network.

### Background of the invention

The utilisation of wavelength division multiplexing (WDM) has enabled more and more data to be carried on individual transmission channels on optical connections such as on optical fibres. The focus has been to enable transmission of larger numbers of data unidirectionally along the optical connection such as the optical fibre.

At the same time, protection requirements impose bidirectional or bi-paths considerations in the design of optical networks.

At least preferred embodiments of the present invention seek to provide a new hub structure for use in optical networks for implementing protection mechanisms in case of e.g. fibre cuts or amplifier failure.

### Summary of the invention

In accordance with a first aspect of the present invention there is provided a hub structure for use in an optical network, the optical network comprising a ring structure carrying a bidirectional optical data signal and a plurality of hub structures arranged in-line within the ring structure, the optical data signal comprising primary and secondary path transmission signals having opposing transmission directions on the ring structure, the hub structure comprising a drop unit arranged, in a normal state, to drop and through-connect a primary receive path signal for further processing at the hub structure, and, in a protection state, to drop and through-connect a secondary receive path signal for further processing at the hub structure.

In one embodiment, the drop unit comprises first and second identical WDM components arranged in series, in-line within the ring structure, and a switch unit disposed at the hub structure side of the first and second WDM components, the switch unit arranged, in a normal state, to through-connect the primary receive path signal dropped via the first WDM component for further processing, and, in a protection state, to through-connect the secondary receive signal dropped via the second WDM component for further processing.

The first and second WDM components may be configured as coarse WDM (CWDM) components and the hub structure may further comprise a dense WDM (DWDM) component arranged to de-multiplex optical signals received from the optical network via the CWDM components, and the switch unit is disposed between the CWDM components and the DWDM component.

In a preferred embodiment, the hub structure further comprises an add unit arranged, in usc, to add a transmit signal from the hub structure to the optical data signal carried on the ring structure. Preferably, the add unit is arranged, in use, to add the transmit signal from the hub structure to the optical data signal carried on the ring structure for transmission on both a primary transmission path and a secondary transmission path.

In one embodiment, the add unit comprises a second DWDM unit, third and fourth identical CWDM components, and an optical coupling unit disposed between the second DWDM unit and the third and fourth DWDM component, and arranged, in use, to split the transmission signal between the third and fourth DWDM components for transmission along the primary and secondary path. Advantageously, the optical coupling unit comprises a 3-db coupler.

The first and second DWDM components may be implemented in one DWDM unit. The first and third CWDM components may be implemented as one CWDM unit, and the second and fourth CWDM components may be implemented as another CWDM unit.

The hub structure may comprise a plurality of pairs of first and second identical WDM components, wherein the first and second WDM components are arranged in series, in line within the ring structure.

In accordance with a second aspect of the present invention there is provided a hub structure for use in an optical network, the optical network comprising a ring structure carrying a bidirectional optical data signal and a plurality of hub structures arranged in-line within the ring structure, the optical data signal comprising primary and secondary path transmission signals having opposing transmission directions on the ring structure, the hub structure comprising an add unit arranged, in a normal state, to add a transmit signal from the hub structure to the optical data signal carried on the ring structure For transmission on the primary path, and, in a protection state, to add the transmit signal to the optical data signal for transmission on the secondary path.

In one embodiment, the add unit comprises first and second identical WDM components arranged in series, in-line within the ring structure, and a switch unit disposed at the hub structure side of the first and second WDM components, the switch unit arranged, in a normal state, to add the transmit signal from the hub structure to the optical data signal carried on the ring structure via the first WDM component for transmission on the primary path, and, in a protection state, to add the transmit signal to the optical data signal via the second WDM component for transmission along the secondary path.

The first and second WDM components may be configured as coarse WDM (CWDM) components and the hub structure may further comprise a dense WDM (DWDM) component arranged to multiplex a plurality of transmit channels each carrying a single wavelength transmit signal for adding to the optical data signal via the switch unit and the first or second CWDM components.

The hub structure may comprise a plurality of pairs of first and second identical WDM components arranged in series, in-line within the ring structure, and a plurality of switch units disposed at the hub structure site of respective pairs of the first and second DWDM components.

In accordance with a third aspect of the present invention there is provided a hub structure for use in an optical network, the optical network comprising a ring structure carrying a bidirectional optical data signal and a plurality of hub structures arranged in-line within the ring structure, the optical data signal comprising primary and secondary path transmission signals having opposing transmission directions on the ring structure, the hub structure comprising an add/drop unit arranged, in a normal state, to add a transmit signal from the hub structure to the optical data signal carried on the ring structure for transmission on the primary path and to drop and through-connect a primary receive path signal for further processing at the hub structure, and, in a protection state, to add the transmit signal to the optical data signal for transmission on the secondary path and to drop and through-connect a secondary receive path signal for further processing at the hub structure.

In one embodiment, the add/drop unit comprises first and second identical WDM components arranged in series, in-line within the ring structure, and a switch unit disposed, at the hub structure site of the first and second WDM components the switch unit arranged, in a normal state, to through-connect the primary receive path signal dropped via the first WDM component for further processing at the hub structure and to add the transmit signal from the hub structure to the optical data signal carried on the ring structure via the first WDM component for transmission on the primary path, and, in a protection state, to through-connect the secondary receive signal dropped via the second WDM component for further processing at the hub structure and to add the transmit signal to the optical data signal via the second WDM component for transmission along the secondary path.

In a preferred embodiment, the first and second DWDM components are configured as CWDM components and the hub structure may further comprise a DWDM component, wherein the switch unit is disposed between the CWDM components and the DWDM component.

The hub structure may comprise a plurality of pairs of first and second identical WDM components arranged in series, in-line within the ring structure, and a plurality of corresponding switch units disposed at the hub structure site of the respective pairs of the first and second WDM components.

A hub structure embodying the present invention may be adapted for use in an optical network that is configured in a peer-peer architecture or a hubbed architecture.

In accordance with a fourth aspect of the present invention, there is provided an optical network incorporating a network elements as defined in any one of the preceding aspects of the invention,

The optical network may be configured in a peer-peer architecture or a hubbed architecture.

Various aspects and features of the present invention are defined in the appended claims.

The invention will now be described by way of example with reference to the accompanying drawings, throughout which like parts are referred to by like references, and in which:

### Brief Description of the drawings

Figure 1a - Physical topology embodying the present invention.
Figure 1b - Logical Network Connections embodying the present invention.
Figure 1c - Use of CWDM to create point to point connections between hubs embodying the present invention.
Figure 1d - The Network Topology embodying the present invention.
Figure 1e - Alternative Logical Network Connections embodying the present invention.
Figure 2 - Network Ring - Optical units within metro/core hub (excluding patch panel) embodying the present invention.
Figure 3 - Line interface, channel switch, and trunk interface cards embodying the present invention.
Figure 4 - Possible DWDM Configurations embodying the present invention.
Figure 5 - DWDM wavelength maps - interleaved and non-interleaved embodying the present invention.
Figure 6 - CWDM Interfaces embodying the present invention.
Figure 7 - CWDM band allocation embodying the present invention.
Figure 8 - A hub structure embodying the present invention.
Figure 9 - A switch unit for use in the hub structure shown in Figure 8 embodying the present invention.
Figure 10 Alternative switch unit for use in the hub structure shown in Figure 8 embodying the present invention.
Figure 11 - A CWDM unit for use in the hub structure shown in Figure 8 embodying the present invention.

### Detailed description of the embodiments

This document describes the design of the optical transmission layer of a telecommunications network platform in which bidirectional transmission and protection can be implemented on a single fibre connection.

In the following description, the general network topology and fundamental design assumptions are first outlined. Following this, the specific network embodying the present invention is discussed. The description discloses the simplest topology - a small ring with no amplifier.

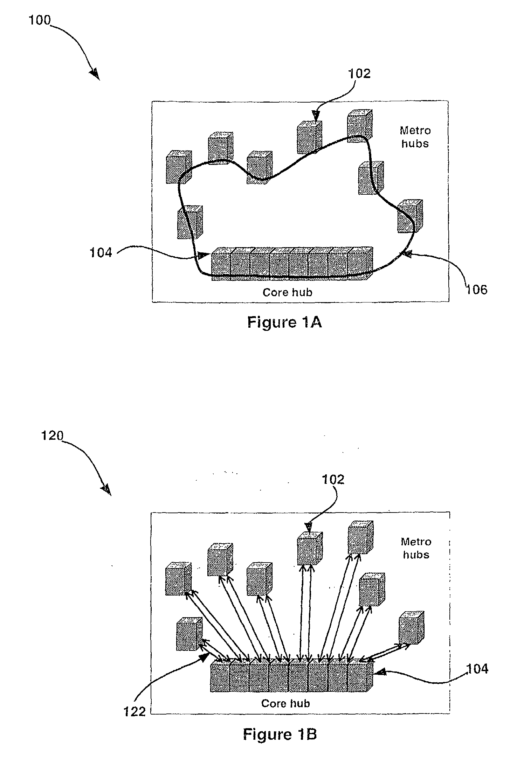

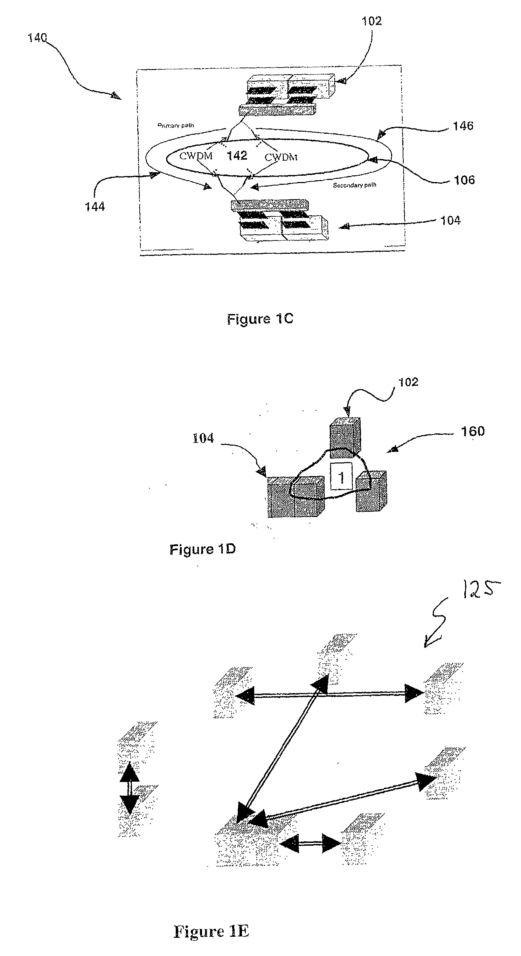

In Figures 1a, 1b and 1c schematic diagrams are provided illustrating the physical topology 100, the logical network connections 120, and the ring network implementation 140. The implementation uses coarse wavelength division multiplexing (CWDM) 142 to create point to point connections 122 between a plurality of metropolitan ("metro") hubs 102 and a single core hub 104 in a ring structured network 106 embodying the present invention.

It is noted that whilst the following description refers to an implementation of the present invention in a hubbed network architecture, i.e. the use of a plurality of metropolitan hubs 102 and a single core hub 104, it will be appreciated by a person skilled in the art that the invention can also be implemented in a peer-peer architecture. In such an architecture, each peer-peer connection resembles the connectivity of one metropolitan hub to the core hub in a hubbed network architecture. Figure 1c illustrates the logical network connections in a hybrid hubbed/peer-peer network 125.

The ring topology 106 provides for optical path protection of the logical connections between the metro hubs 102 and the core hub 104, since each metro hub 102 is able to access the core hub 104 via two geographically diverse routes, namely the clockwise 146 and counter-clockwise 144 propagation directions of the optical fibre ring, as shown in Figure 1c. The normal working path is termed the "primary" 144, and the protection path, which is used when a failure occurs on the primary path, is termed the ''secondary" 146. In use, the primary path 144 will typically be the shorter of the two paths between a metro hub and the core hub, while the secondary path 146 will be the longer.

The network architecture disclosed here is capable of providing full functionality, i.e. bidirectional transmission and protection, on a single fibre. However, it is important to note that any number of additional fibres may be employed in order to provide higher transmission capacity to support a larger number of wavelength connections and/or hubs.

It will be appreciated that one or more of the additional fibres may again be implemented as providing full functionality, i.e. bidirectional transmission and protection, on a single fibre. Accordingly, the present invention can provide for network operators a more cost-effective initial system, more efficient use of fibre resources, and a more graceful upgrade path as compared to conventional architectures such as unidirectional path switched rings (UPSR's) or bidirectional line switched rings (BLSR's) which require transmission fibres to be commissioned in multiples of two or four respectively.

Each metro hub 102 in the exemplary embodiment communicates with the core hub 104 using one or more wavelengths uniquely allocated to that metro hub, and not used by any other metro hub, and the same one or more wavelengths are used on both the primary path 144 and the secondary path 146.

Figure 1d shows a schematic of a network embodying the present invention. The embodiment 160 (Figure 1d) is a small ring network in which no optical amplifiers are required. The key characteristics of the embodiment 160 (Figure 1d) are:
- the maximum ring diameter is limited by the optical power budget. Advantageously, components and fibre with low attenuation should be employed;
- transmission distances are short. Chromatic dispersion is therefore not a limiting factor. Advantageously, some cheaper components, such as short-haul directly modulated lasers, may be employed;
- a simple passive optical switch, such as a fibre switch, can be used for protection. Advantageously, the protection switch is located between a CWDM and a DWDM and is controlled by the hub;
- except for the CWDM add-drop filters, there are no filters or amplifiers on the main fibre ring. In the event of a protection switch in which transmitted and received signals swap directions, e.g. from clockwise to counter-clockwise or vice versa, the signals will not be blocked at any components. Consequently, many different CWDM and DWDM configurations may be implemented.

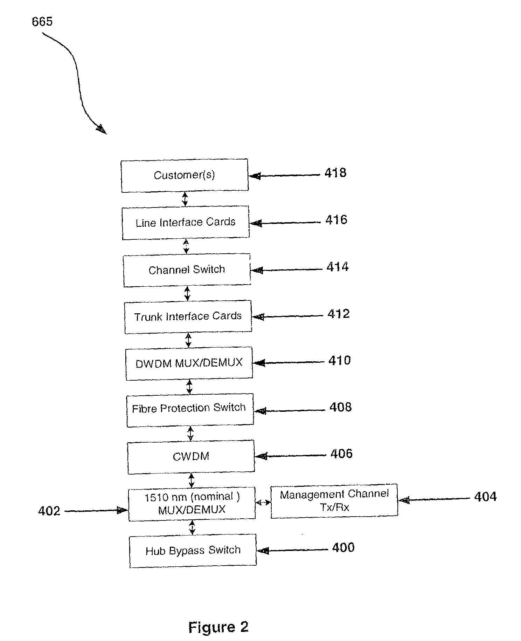

The hub design in the embodiment 160 (Figure 1d) will now be described in more detail. Figure 2 is a block diagram that shows schematically the major units that comprise a hub in the embodiment 160 (Figure 1d). Figure 2 shows the logical layout for the different units the optical signal passes through. In particular, the optical signal is transmitted through the Hub Bypass Switch 400 where it is then directed at the CWDM 406. The signal is then transmitted onto the Fibre protection switch 408 followed by the DWDM MUX/DEMUX 410, where it is then transmitted to the Trunk Interface Cards 412. When the signal is received at the Channel switch 414 from the Trunk Interface Cards 412 it is then transmitted onto the Customers 418 via the Line Interface Cards 416. Each of these units which together comprise the network hub 665 is now discussed separately. In the management MUX/DEMUX unit 402 out-of-band supervisory channel data (e.g. at 1510 nm, nominal) is added/dropped via a management channel transmit/receive unit 404 for processing at the hub 665.

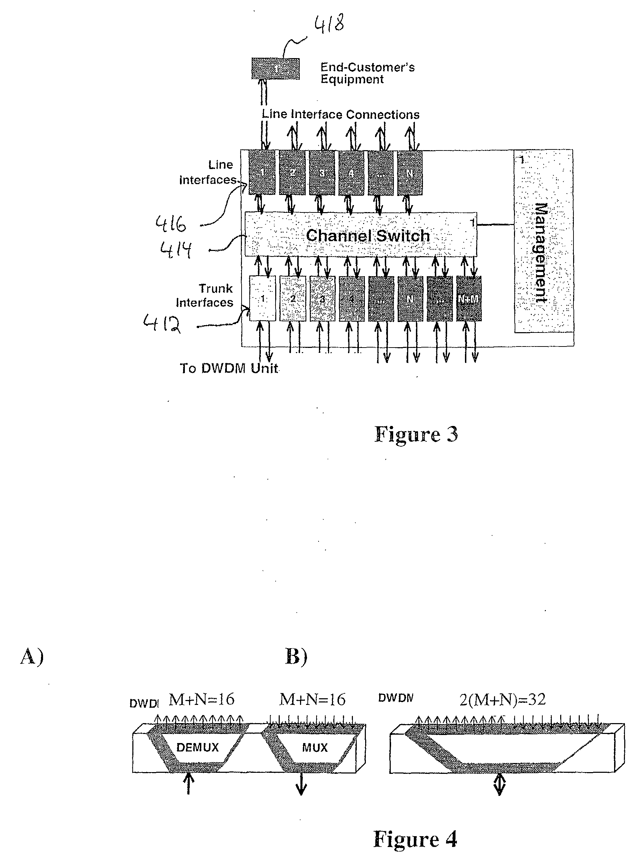

Figure 3 is a block diagram that shows schematically the configuration of the Line interface Cards 416, Channel Switch 414 and Trunk Interface cards 412 in a hub configured for use in the embodiment 160 (Figure 1d). Each Line Interface Card 416 provides a duplex connection to a Customer Equipment Unit 418, and is connected to a single Trunk Interface Card 412 according to the configuration of the Channel Switch 414. In the hub configuration shown in Figure 3, the hub is capable of providing M:N channel protection, in which M+N Trunk Interface Cards 412 are provided to connect only N Line Interface Cards 416. Thus up to M trunk failures can be restored by switching the corresponding Line Interface Cards 416 to an unused Trunk Interface Card 412 by reconfiguring the Channel Switch 414.

Returning to Figure 2, each Trunk Interface Card 412 requires a suitable single-frequency DWDM laser for transmission of the trunk signal into the network via the DWDM MUX/DEMUX Unit 410, the optional Fibre Protection Switch 408, the CWDM Unit 406 and the Hub Bypass Switch 400. Advantageously in the embodiment 160 this laser may be a relatively low-cost device, such as a directly-modulated, temperature-stabilised distributed feedback (DFB) semiconductor laser. However it will be appreciated that more costly, higher-performance lasers could be used, and may be necessary for Trunk Interface Cards 412 which support very high transmission rates, e.g. 10 Gb/s and above, or where very close DWDM channel spacing is employed requiring greater wavelength stability.

Each Trunk Interface Card 412 is connected by a pair of fibres to the DWDM MUX/DEMUX Unit 410. Each fibre connecting a Trunk Interface Card 412 to the DWDM Unit 410 carries a single wavelength in one direction. In the exemplary embodiment described here, half of these wavelengths will carry data transmitted from the hub and half will carry data to be received at the hub, however it will be appreciated by persons skilled in the art that hub configurations are possible in which asymmetric transmission is provided. In the exemplary embodiment there are 16 full-duplex channels at each hub comprising 16 transmitted (Tx) wavelengths and 16 received (Rx) wavelengths, i.e. a total of 32 different wavelengths. However, it will be appreciated that a greater or smaller number of channels could be accommodated without departure from the scope of the present invention. The DWDM Unit 410 receives the 16 Tx channels from the Trunk Interface Cards 412 and multiplexes them onto a single fibre. It also receives the 16 Rx channels on a single fibre from the CWDM Unit 406 (optionally via the Fibre Protection Switch 408) and demultiplexes them to the 16 Rx fibres connected to the Trunk Interface Cards 412.

Advantageously, the hub may comprise spare Trunk Interface Cards 412 to provide a number of protection channels per direction. An example of such a configuration is shown in Figure 3, in which MAN channel protection is supported, where M+N =16 for the exemplary embodiment, and M is the number of additional Trunk Interface Cards 412 provided.

Turning now to Figures 4A and 4B, which show schematically two exemplary embodiments of the DWDM MUX/DEMUX Unit 410. In the first exemplary embodiment, Figure 4A, the DWDM MUX/DEMUX Unit 410 comprises internally separate optical multiplexing means 606 and demultiplexing means 608, and comprises externally a unidirectional input fibre 600 and a unidirectional output fibre 602. In the second exemplary embodiment, Figure 4B, the DWDM MUX/DEMUX Unit 410 comprises internally a single optical multiplexing and demultiplexing means 610, and comprises externally a single bidirectional input/output fibre 604. In either embodiment the optical multiplexing and demultiplexing means may be, e.g. a tree-apace diffraction grating based device, or a planar lightwave circuit based device such as an arrayed waveguide grating. It will be appreciated that other embodiments of the DWDM MUX/DEMUX Unit 410, and other optical multiplexing and demultiplexing means, may be employed without departing from the scope of the present invention.

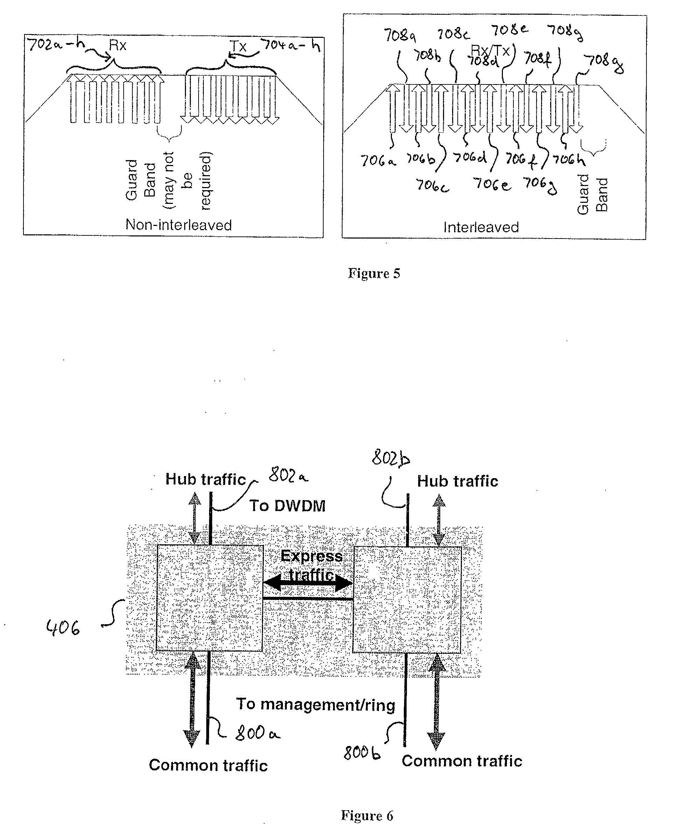

The DWDM Wavelength Map is the allocation of Tx and Rx channels to specific wavelengths for transmission on one or more fibres in the optical ring network. Figures 5A and 5B show schematically two exemplary embodiments of a DWDM Wavelength Map in which there are eight Rx channels, 702*a*-*h* and 706*a*-*h*, and eight Tx channels, 704*a*-*h* and 708*a*-*h*. It will be appreciated that different numbers of Tx and Rx channels, and other DWDM Wavelength Maps may be employed without departing from the scope of the present invention.

The exemplary embodiment shown in Figure 5A is referred to as a non-interleaved wavelength map, because the Rx wavelengths 702*a*-*h* occupy a wavelength band that is disjoint from the wavelength band occupied by the Tx wavelengths 704*a*-*h*. The exemplary embodiment shown in Figure 5B is referred to as an interleaved wavelength map, because the Rx wavelengths 706*a*-*h* alternate with the Tx wavelengths 708*a*-*h* within the same wavelength band. It will be appreciated that other wavelength maps may be constructed by combining bands comprising different numbers of interleaved and non-interleaved wavelengths without departing from the scope of the present invention.

A non-interleaved wavelength map may be used to simplify network operation and management, and relax tolerances on components to reduce costs, by grouping Rx wavelengths 702*a-h* and Tx wavelengths 704*a*-*h* so that they may easily be separated from each other, e.g. for routing or amplification, by simply using a coarse optical filter. An interleaved wavelength map may be used to enable Rx wavelengths 706*a*-*h* and Tx wavelengths 708*a*-*h* in a single fibre to be packed more closely together, thus increasing the total capacity of the network. This increase in packing density is achieved because crosstalk may occur, e.g. at filters and in transmission, between closely-spaced wavelengths that arc propagating in the same direction, however crosstalk is minimal between wavelengths propagating in opposite directions. Thus interleaving allows the spacing between wavelengths propagating in one direction to be wide enough to minimise crosstalk (c.g. 50 GHz), whereas the spacing between adjacent countcrpropagating channels is reduced to half this value (e.g. 25 GHz), effectively doubling the capacity of the fibre.

Advantageously, interleaved and non-interleaved wavelength mapping techniques may be employed in a single network in order to obtain the benefits of simplified operation and management, reduced costs, higher capacity, or a trade-off amongst these, as required.

The CWDM Unit 406 (Figure 2) adds/drops the appropriate wavelength blocks for the hub and passes all other express traffic by the hub. Figure 6 shows schematically the logical connections to, from and within the CWDM Unit 406 (Figure 2). The CWDM Unit 406 (Figure 2) has two trunk fibre connections 800*a*, 800*b* to the optical fibre ring via the Hub Bypass Switch 400 (Figure 2). These two trunk fibres 800a, 800b correspond to the two directions around the ring. Note that signals propagate bidirectionally on each of these fibres 800a, 800b, and that one direction around the ring corresponds to the primary path, and the other to the secondary path to provide protection. Therefore in a minimal configuration, only one transmission fibre is required between each pair of adjacent hubs. The network is therefore able to provide bidirectional transmission and protection on a ring comprising single fibre connections.

The CWDM Unit 406 also has two fibre connections 802*a*, 802*b* to the DWDM MUX/DEMUX Unit 410 via a Fibre Protection Switch 408 (Figure 2). One function of the CWDM Unit 406 is to demultiplex blocks of wavelengths received on the trunk fibre connections 800*a*, 800*b* and transfer them to the hub via the fibre connections 802*a*, 802*b*. A second function of the CWDM Unit 406 is to accept blocks of wavelengths transmitted by the hub via the fibre connections 802*a*, 802*b* and multiplex them onto the trunk fibre connections 800*a*, 800*b*. A third function of the CWDM Unit 406 is to pass all trunk wavelengths received on the trunk fibre connections 800*a*, 800*b* which are not demultiplexed at the hub across to the opposite trunk fibre connection 800*b*, 800*a* via the Express Traffic path 804. Advantageously, the CWDM Unit 406 should provide high isolation, i.e. signals destined for the hub traffic fibres 802*a*, 802*b* should not appear in the Express Traffic path 804 and vice versa, and should have low insertion loss, i.e. ring traffic passing between the trunk fibres 800*a*, 800*b* via the Express Traffic path 804 should experience minimum attenuation.

The allocation of the wavelength bands that are added and dropped by the CWDM Unit 406 (figure 2) determines the logical connectivity of the network and the number of channels allocated to the hubs. A number of exemplary CWDM Band Allocation schemes are now disclosed. These exemplary schemes are based on using the conventional transmission band, referred to as "C-Band", which spans the wavelength range from around 1530 nm to 1560 nm, or additionally using the long-wavelength transmission band, referred to as "L-Band", which spans the wavelength range from around 1580 nm to 1610 nm. In these exemplary allocation schemes the wavelength spacing is assumed to be 50 GHz (approximately 0.4 nm). It is further assumed that each hub comprises 16 Trunk Interface Cards 412 (Figure 2) and 16 Line Interface Cards 416 (Figure 2), and thus requires 16 Tx wavelengths and 16 Rx wavelengths. It will be appreciated that other transmission bands, alternative CWDM bandwidths and spacings, and hubs with different numbers of Trunk Interface Cards 412 (Figure 2) and Line Interface Cards 416 (Figure 2), may be employed without departing from the scope of the present invention.

The CWDM Band Allocation determines the number of hubs that can transmit and receive on a single fibre ring. The options available include:
- using C-Band;
- using C+L-Bands;
- using a single continuous wavelength band comprising both Tx wavelengths and Rx wavelengths;
- using separate wavelength bands comprising Tx wavelengths and Rx wavelengths.

If C-Band only is used then two hubs may be accommodated on a single fibre. If C+L-Bands are used then four hubs may be accommodated on a single fibre. If additional hubs are required, then further Tx and Rx channels can be provided using the same wavelengths within the C- and L-bands transmitted on additional fibres. It will be appreciated that, although in the example presented here 16 Tx channels and 16 Rx channels are provided at each hub, there is a trade-off between the number of hubs supported, the number of Tx and Rx channels per hub, and the number of fibres required, such that with fewer channels per hub, more hubs can be supported on each fibre.

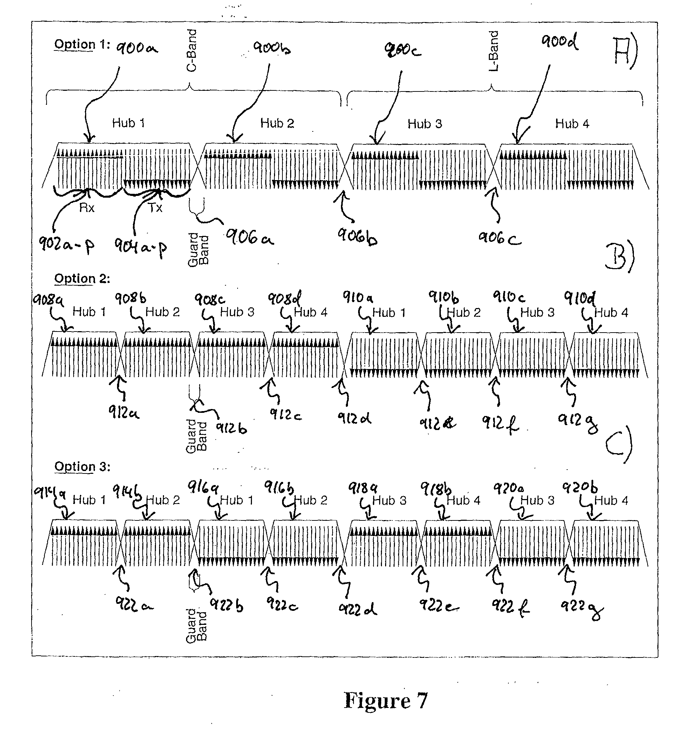

Figures 7A, 7B and 7C illustrate schematically three exemplary allocation schemes based on the use of C+L-Bands to support four hubs. In Figure 7A each hub is allocated a single continuous wavelength band 900*a*-*d* comprising both Tx wavelengths and Rx wavelengths. Within each CWDM Band 900*a*-*d* the shorter wavelengths are allocated to Rx channels 902*a*-*p* and the longer wavelengths are allocated to Tx channels 904*a*-*p*. The CWDM Bands 900*a*-*d* arc separated by Guard Bands 906*a*-*c* which allow for the finite roll-off rate at the edges of the CWDM Band filters to minimise crosstalk between bands.

In Figure 7B each hub is allocated a wavelength band 908*a*-*d* within the C-Band for Rx wavelengths and a wavelength band 910*a*-*d* within the L-Band for Tx wavelengths. The CWDM Bands 908*a*-*d*, 910*a-d* are separated by Guard Bands 912*a*-*g* which allow for the finite roll-off rate at the edges of the CWDM Band filters to minimise crosstalk between bands.

In Figure 7C each hub is allocated two separate wavelength bands within either the C-Band or L-Band for Tx wavelengths and Rx wavelengths. Hub 1 and Hub 2 are allocated one band each 914*a*, 914*b* within the C-Band for Rx wavelengths, and another band 916*a*, 916*b* within the C-Band for Tx wavelengths. Hub 3 and Hub 4 are allocated one band each 918*a*, 918*b* within the L-Band for Rx wavelengths, and another band 920*a*, 920*b* within the L-Band for Tx wavelengths. The CWDM Bands 914*a*, 914*b*, 916*a*, 916*b*, 918*a*, 918*b*, 920*a*, 920*b* are separated by Guard Bands 922*a*-*g* which allow for the finite roll-off rate at the edges of the CWDM Band filters to minimise crosstalk between bands.

With any of these exemplary allocation schemes, the total number of channels may be increased by deploying additional hubs and a corresponding number of additional fibres.

Returning now to Figure 2, the network hub 665 in a preferred embodiment of the present invention comprises a Fibre Protection Switch 408 between the CWDM Unit 406 and the DWDM MUX/DEMUX Unit 410. The function of the Fibre Protection Switch 408 is to switch channels from the primary fibre path 144 (Figure 1c) to the secondary fibre path 146 (Figure 1c) on the ring in the event of a fault. The following discussion details how protection switching may be implemented at the hubs 102, 104 (Figure 1c).

Fibre protection switching occurs between the DWDM MUX/DEMUX Unit 410 and the CWDM Unit 406. This ensures that through traffic is not disrupted if the hub traffic is switched from the primary path 144 (Figure 1c) to the secondary path 146 (Figure 1c). In addition, the Fibre Protection Switch 408 is not a single point of failure in the ring.

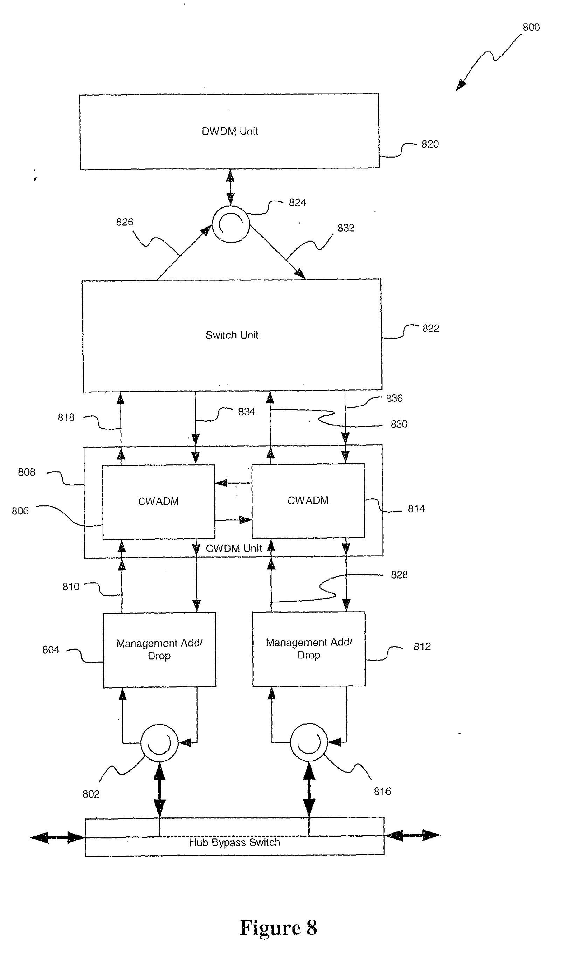

Figure 8 shows the functional components of a hub structure 800 embodying the present invention. In the following, the primary and secondary path configurations will be described for traffic received at and transmitted from the hub structure 800.

Starting with the primary receive path, the primary receive signal enters the hub structure 800 via circulator 802 and a management Add/Drop unit 804 into a first coarse wavelength add-drop multiplexer (CWADM) component 806 of the CWDM unit 808 (as indicated by arrow 810). In the management Add/Drop units 804 and 812 out-of-band supervisory channel data is added/dropped for processing at the hub structure 800.

The primary receive signal is dropped from other (express) traffic on the network in the CWADM component 806, while the express traffic is expressed through back into the network via the second CWADM component 814. the second management Add/Drop unit 812 and the second circulator 816.

The dropped primary receive signal (indicated by arrow 818) is through-connected to the DWDM unit 820 via switch unit 822 and circulator 824 (as indicated by arrow 826). From the DWDM unit 820, the de-multiplexed individual primary receive channels are interfaced to subscribers (not shown) connected to the hub structure 800.

In case of e.g. a fibre cut on the primary receive path-side of the hub structure 800, receipt is switched to the secondary path. The secondary receive signal (consisting of the same wavelength channels as the primary receive signals but travelling in opposite direction around the network) enters the hub structure 800 via circulator 816 and management Add/Drop unit 812 into the second CWADM component 814 of the CWDM unit 808 (as indicated by arrow 828).

The secondary receive signal is dropped from the other (express) traffic on the network in the CWADM component 814, while the express traffic is expressed through back into the network via the first CWADM component 806, the management Add/Drop unit 804 and the circulator 802.

The dropped secondary receive signal (as indicated by arrow 830) is through-connected to the DWDM unit 820 via switch unit 822, now in a protection state, and via the same port of circulator 824, again as indicated by arrow 826. From the DWDM unit 820, the de-multiplexed individual secondary receive channels (identical to the primary receive channels) are interfaced to subscribers (not shown) connected to the hub structure 800.

Turning now to the primary transmission path from the hub structure 800 into the network, transmit channel signals from the subscribers (not shown) are multiplexed by the DWDM unit 820 into a transmit signal leaving the DWDM unit 820 via the circulator 824 and in to the switch unit 822 (as indicated by arrow 832). The transmit signal is through connected by the switch unit 822, in the normal state, to the first CWADM component 806 (as indicated by arrow 834) and into the network via management Add/Drop unit 804 and circulator 802 along the primary transmission path.

In case of e.g. a fibre cut on the primary transmission path-side of the hub structure 800, transmission is switched to the secondary path. The switch unit 822, now in the protection state, through-connects the transmit signal to the second CWADM component 814 (as indicated by arrow 836), and into the network via the second management Add/Drop unit 812 and the second circulator 816 along the secondary transmission path.

In the exemplary embodiment shown in Figure 8, the switching of the switch unit 822 is effected in response to a control signal received at the hub structure 800 via the supervisory channel. It will be appreciated by a person skilled in the art, that in alternative embodiments the hub structure itself can incorporate means for failure detection, such as "no-signal'' detection means monitoring the primary receive signal.

It will also be appreciated by the person skilled in the art, that performance monitoring and/or bit-error rate analysis may be conducted to facilitate the switching. Furthermore, where 1+1 transmission of optical signals occurs on both the primary and secondary paths, performance monitoring of both paths at the receiving hub may be performed and, in the normal state, the signal with the highest quality is selected for further processing at the hub.

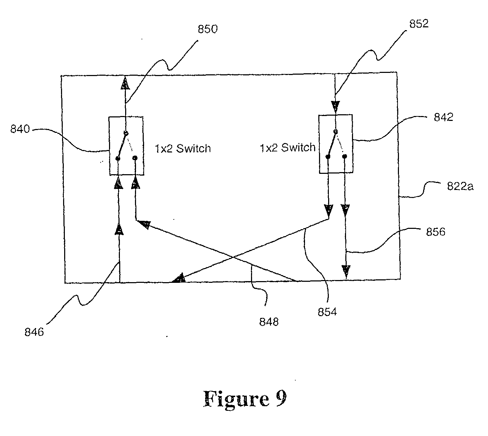

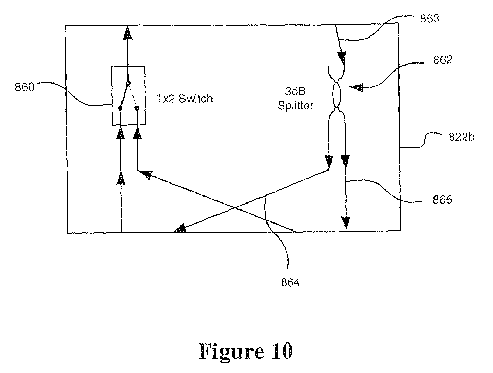

Two alternative embodiments of the switch unit 822 will now be described with reference to Figures 9 and 10.

In Figure 9, the switch unit 822a comprises two 1x2 switch components 840, 842. The switch component 840 selectively through-connects either the primary receive signal indicated by arrow 846 (compare arrow 818 in Figure 8) or the secondary receive signal indicated by arrow 848 (compare arrow 830 in Figure 8) to the DWDM unit 820 (Figure 8) as indicated by arrow 850 (compare arrow 826 in Figure 8).

Similarly, the switch component 842 selectively through-connects the transmit signal indicated by arrow 852 (compare arrow 832 in Figure 8) to the network either along the primary transmit path indicated by arrow 854 (compare arrow 834 in Figure 8) or along the secondary path indicated by arrow 856 (compare arrow 836 in Figure 8).

This embodiment has the advantage that in the case of a failure, e.g. a fibre cut, the transmitted signals are all switched to the secondary path, thus ensuring that no light will be emitted from the fibre at the location of the failure.

An additional advantage is that at all times, all transmitted power is directed to the working path, maximising the available power budget of the system.

Turning now to Figure 10, in an alternative embodiment, the switch unit 822b comprises one 1x2 switch component 860 and a 3dB splitter component 862. In this embodiment, the switch component 860 functions in the same way as switch component 840 of the switch unit 822a of Figure 9.

In relation to transmission from the hub structure, the transmission signal indicated by arrow 863 (compare arrow 832 in Figure 8) is split between transmission along the primary path indicated by arrow 864 (compare arrow 834 in Figure 8) and along the secondary path indicated by arrow 866 (compare arrow 836 in figure 8). Thus, a 1+1 protection in transmission is realised.

This embodiment has the advantage that in the case of a failure, no switching is required at the transmitting hub. Thus restoration is faster, and requires no management signalling back to the transmitting hub. In such an embodiment, performance monitoring of both paths maybe conducted at a receiving hub and the one with the highest quality signal can be selected, in a normal state, for further processing at the receiving hub.

The 3 dB splitter component 862 results in the "loss" of half the transmitted power to the (unused) protection path, decreasing the overall power budget of the system, which needs to be considered in the network design.

In the case of e.g. a fibre cut, there is no mechanism in this embodiment to deactivate the signal in the failed path- the signal will continue to be broadcast along both primary and secondary paths. However, the power budget of the system may be designed so that the total power that may be emitted at any fibre break is compatible with Class 1 laser standards, i.e. it is eye-safe. In this case it is not necessary to deactivate the signals in a failed path.

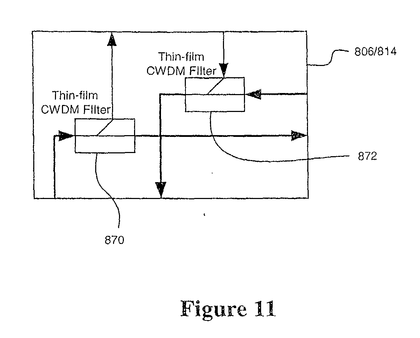

In Figure 11, an exemplary embodiment of the CWADM components 806 and 814 is shown. The CWADM component 806/814 comprises two thin film CWDM filter elements 870, 872 for dropping and adding the receive and transmit signals from and to the network traffic respectively.

It will be appreciated by the person skilled in the art that numerous variations and/or modifications may be made to the present invention as shown in the specific embodiments without departing from the scope of the invention as broadly described. The present embodiments are, therefore, to be considered in all respects to be illustrative and not restrictive.

In the claims that follow and in the summary of the invention, except where the context requires otherwise due to express language or a necessary implication, the word "comprising" is used in the sense of "including", i.e. the features specified may be associated with further features in various embodiments of the invention.

Various different aspects and features of the present invention are defined in the appended claims. Combinations of features from the dependent claims may be combined with features of the independent claims as appropriate and not merely as explicitly set out in the claims.

## Claims

1. A hub structure for use in an optical network, the optical network comprising a ring structure carrying a bidirectional optical data signal and a plurality of hub structures arranged in-line within the ring structure, the optical data signal comprising primary and secondary path transmission signals having opposing transmission directions on the ring structure, the hub structure comprising:
- a drop unit arranged, in a normal state, to drop and through-connect a primary receive path signal for further processing at the hub structure, and, in a protection state, to drop and through-connect a secondary receive path signal for further processing at the hub structure.

2. A hub structure as claimed in claim 1, wherein the drop unit comprises first and second identical WDM components arranged in series, in-line within the ring structure, and a switch unit disposed at the hub structure side of the first and second WDM components, the switch unit arranged, in a normal state, to through-connect the primary receive path signal dropped via the first WDM component for further processing, and, in a protection state, to through-connect the secondary receive signal dropped via the second WDM component for further processing.

3. A hub structure as claimed in claim 2, wherein the first and second WDM components are configured as coarse WDM (CWDM) components and the hub structure further comprises a first dense WDM (DWDM) component arranged to de-multiplex optical signals received from the optical network via the CWDM components, and the switch unit is disposed between the CWDM components and the DWDM component.

4. A hub structure as claimed in claim 1, wherein the hub structure further comprises an add unit arranged, in use, to add a transmit signal from the hub structure to the optical data signal carried on the ring structure.

5. A hub structure as claimed in claim 4, wherein the add unit is arranged, in use, to add the transmit signal from the hub structure to the optical data signal carried on the ring structure for transmission on both a primary transmission path a secondary transmission path.

6. A hub structure as claimed in claims 5, wherein the add unit comprises a second DWDM unit, third and fourth identical CWDM components, and an optical coupling unit disposed between the second DWDM unit and the third and fourth DWDM component, and arranged, in use, to split the transmission signal between the third and fourth DWDM components for transmission along the primary and secondary path.

7. A hub structure as claimed in claim 6, wherein the optical coupling unit comprise;: a 3-db coupler.

8. A hub structure as claimed in claim 6, wherein the first and second DWDM components are implemented in one DWDM unit.

9. A hub structure as claimed in claim 6, wherein the first and third CWDM components are implemented as one CWDM unit, and the second and fourth CWDM components are implemented as another CWDM unit.

10. A hub structure as claimed in claim 2, wherein the hub structure comprises a plurality of pairs of first and second identical WDM components, wherein the first and second WDM components are arranged in series, in line within the ring structure.

11. A hub structure as claimed in claim 6, wherein the hub structure comprises a plurality of pairs of third and fourth identical WDM components, wherein the third and fourth WDM components are arranged in series, in line within the ring structure.

12. A hub structure for use in an optical network, the optical network comprising a ring structure carrying a bidirectional optical data signal and a plurality of hub structures arranged in-line within the ring structure, the optical data signal comprising primary and secondary path transmission signals having opposing transmission directions on the ring structure, the hub structure comprising:
- an add unit arranged, in a normal state, to add a transmit signal from the hub structure to the optical data signal carried on the ring structure for transmission on the primary path, and, in a protection state, to add the transmit signal to the optical data signal for transmission on the secondary path.

13. A hub structure as claimed in claim 12, wherein the add unit comprises first and second identical WDM components arranged in series, in-line within the ring structure, and a switch unit disposed at the hub structure side of the first and second WDM components, the switch unit arranged, in a normal state, to add the transmit signal from the hub structure to the optical data signal carried on the ring structure via the first WDM component for transmission on the primary path, and, in a protection state, to add the transmit signal to the optical data signal via the second WDM component for transmission along the secondary path.

14. A hub structure as claimed in claim 13, wherein the first and second WDM components are configured as coarse WDM (CWDM) components and the hub structure further comprises a dense WDM (DWDM) component arranged to multiplex a plurality of transmit channels each carrying a single wavelength transmit signal for adding to the optical data signal via the switch unit and the first or second CWDM components.

15. A hub structure as claimed in claim 13, wherein the hub structure comprises a plurality of pairs of first and second identical WDM components arranged in series, in-line within the ring structure, and a plurality of switch units disposed at the hub structure site of respective pairs of the first and second DWDM components.

16. A hub structure for use in an optical network, the optical network comprising a ring structure carrying a bidirectional optical data signal and a plurality of hub structures arranged in-line within the ring structure, the optical data signal comprising primary and secondary path transmission signals having opposing transmission directions on the ring structure, the hub structure comprising:
- an add/drop unit arranged, in a normal state, to add a transmit signal from the hub structure to the optical data signal carried on the ring structure for transmission on the primary path and to drop and through-connect a primary receive path signal for further processing at the hub structure, and, in a protection state, to add the transmit signal to the optical data signal for transmission on the secondary path and to drop and through-connect a secondary receive path signal for further processing at the hub structure.

17. A hub structure as claimed in claim 16, wherein the add/drop unit comprises first and second identical WDM components arranged in series, in-line within the ring structure, and a switch unit disposed, at the hub structure site of the first and second WDM components the switch unit arranged, in a normal state, to through-connect the primary receive path signal dropped via the first WDM component for further processing at the hub structure and to add the transmit signal from the hub structure to the optical data signal carried on the ring structure via the first WDM component for transmission on the primary path, and, in a protection state, to through-connect the secondary receive signal dropped via the second WDM component for further processing at the hub structure and to add the transmit signal to the optical data signal via the second WDM component for transmission along the secondary path.

18. A hub structure as claimed in claim 17, wherein the first and second DWDM components are configured as CWDM components and the hub structure further comprises a DWDM component, wherein the switch unit is disposed between the CWDM components and the DWDM component.

19. A hub structure as claimed in claim 17, wherein the hub structure comprises a plurality of pairs of first and second identical WDM components arranged in series, in-line within the ring structure, and a plurality of corresponding switch units disposed at the hub structure site of the respective pairs of the first and second WDM components.

20. A hub structure as claimed in claims I or 12, wherein the hub structure is adapted for use in an optical network that is configured in a peer-peer architecture or a hubbed architecture.

21. An optical network incorporating a network elements as defined in claims 1 or 12.

22. An optical network as claimed in claim 21, wherein the optical network is configured in a peer-peer architecture or a hubbed architecture.
